# EUROPÄISCHE PATENTSCHRIFT

(11) **EP 2 997 289 B1**
(45) Veröffentlichungstag und Bekanntmachung des Hinweises auf die Patenterteilung: **21.03.2018**
(21) Anmeldenummer: 15723487.3
(22) Anmeldetag: 13.05.2015
(51) Int. Cl.: F16H 59/02, F16H 59/10, F16H 61/36

(54) **SCHALTVORRICHTUNG**
SELECTOR DEVICE
DISPOSITIF DE COMMUTATION

(30) Priorität: 20.05.2014 DE 102014107077
(43) Veröffentlichungstag der Anmeldung: 23.03.2016
(73) Patentinhaber: ECS Engineered Control Systems AG, 9000 St. Gallen (CH)
(72) Erfinder: SCHIRMER, Heiko, 21649 Regesbostel (DE)
(74) Vertreter: Müller, Eckhard
(86) Internationale Anmeldenummer: PCT/EP2015/060650
(87) Internationale Veröffentlichungsnummer: WO 2015/177032

(56) Entgegenhaltungen:
- EP-A1- 2 261 535
- DE-A1-102011 053 177
- JP-A- 2000 177 422
- US-A1- 2004 031 346

## Beschreibung

Die Erfindung betrifft eine Schaltvorrichtung für ein Getriebe eines Kraftfahrzeuges nach dem Oberbegriff des Patentanspruchs 1

Aus der DE 10 2011 053 177 A1 ist eine Schaltvorrichtung, wie sie nachfolgend anhand der Figuren 1 und 2 beschrieben wird, bekannt. Diese Schaltvorrichtung weist einen Betätigungshebel 1 auf, der wahlweise in eine erste Schaltgasse, insbesondere eine Automatikschaltgasse beispielsweise zur Auswahl einer der Schaltstellungen R, D, N, P oder in eine zweite Schaltgasse, insbesondere zur Anwahl von "+" zum Hochschalten oder zur Anwahl von "-" zum Herunterschalten, überführbar ist.

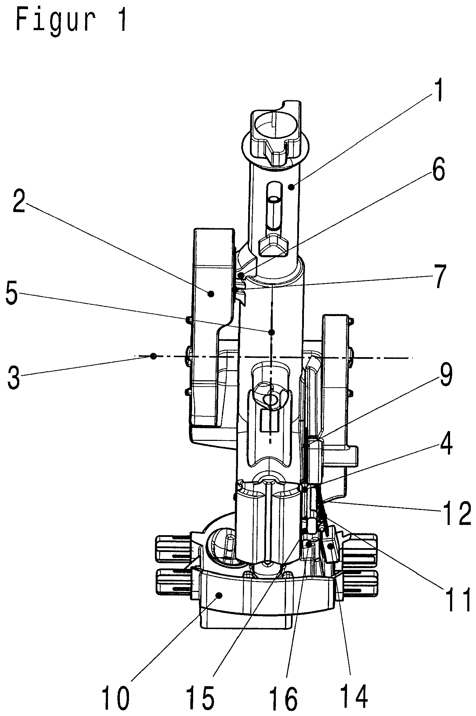

Bei der in Figur 1 dargestellten Detailansicht befindet sich der Betätigungshebel 1 in der ersten Schaltgasse. In dieser Stellung ist der Betätigungshebel 1 mit einem Übertragungsbauteil 2 mechanisch verkoppelt. Dies derart, dass das Übertragungsbauteil 2 zur Betätigung eines in dieser Ansicht nicht sichtbaren Seilzuges oder eines Schaltgestänges mit dem Betätigungshebel verschwenkt werden kann. Eine Verschwenkung zur Anwahl einer von mehreren Schaltstellungen in der ersten Schaltgasse erfolgt durch Verschwenken des Betätigungshebels 1 - und damit auch des Übertragungsbauteils 2 - in einer zur Zeichenebene senkrechten Ebene, nämlich durch Verschwenken um eine Schwenkachse 3. Das Übertragungsbauteil 2 weist zur Ankopplung eines Schaltseilzuges eine Ankoppelnase 4 auf, die in dieser Figur nur teilweise zu sehen ist.

Zur Überführung des Betätigungshebels 1 in die zweite Schaltgasse wird dieser um eine Überführungsachse 5 verschwenkt. Die Überführungsachse 5 ist senkrecht zu einer Ebene angeordnet, in der sich die Schwenkachse 3 befindet. Darüber hinaus ist die Überführungsachse 5 aus Sicht des Bedienens des Betätigungshebels 1 oberhalb der Schwenkachse 3 angeordnet.

Der Betätigungshebel weist einen ersten Vorsprung 6 auf, der in eine erste Ausnehmung 7 des Übertragungsbauteils 2 eingreift, wenn der Betätigungshebel 1 sich in der ersten Schaltgasse befindet. Darüber hinaus weist der Betätigungshebel 1 einen zweiten Vorsprung 8 auf, der in eine zweite Ausnehmung 9 des Übertragungsbauteils 2 eingreift, wenn der Betätigungshebel 1 in die erste Schaltgasse überführt ist. Auf diese Weise ist sichergestellt, dass das Übertragungsbauteil zur Betätigung des Seilzuges beziehungsweise eines Schaltgestänges mithilfe des Betätigungshebels verschwenkt werden kann. Der Betätigungshebel 1 und das Übertragungsbauteil 2 sind - wenn sich der Betätigungshebel in der ersten Schaltgasse befindet - gemeinsam um dieselbe Schwenkachse 3 schwenkbar gelagert. Wenn der Betätigungshebel 1 in die zweite Schaltgasse überführt wird, wird das Übertragungsbauteil 2 relativ zu einem - vorzugsweise relativ zu einem Kraftfahrzeug ortsfesten - Schaltrahmen 10, von dem hier lediglich ein Teil zu sehen ist, mittels eines besonderen Arretiermittels 11 festgelegt und damit die Verschwenkbarkeit aufgehoben. Wenn sich der Betätigungshebel 1 in der zweiten Schaltgasse befindet, kann dieser, insbesondere zum manuellen Hoch- oder Herunterschalten, jedoch weiterhin um die Schwenkachse 3 verschwenkt werden.

Das Arretiermittel 11 ist als Federelement 12, nämlich als Federzunge, ausgebildet. Ein erstes Ende des Arretiermittels 11 ist fest mit dem Übertragungsbauteil 2 verbunden. Das gegenüberliegende zweite Ende 14 des Arretiermittels 11 endet frei und wird von einem Betätigungsvorsprung 15 des Betätigungshebels 1 gegen eine vom Federelement 12 ausgehende Vorspannung in einer Freigabestellung gehalten.

Sobald der Betätigungshebel 1 in die zweite Schaltgasse überführt wird, bewegt sich der Betätigungsvorsprung 15 von dem Arretiermittel 11 derart weg, dass das zweite Ende des Arretiermittels 14 in eine Arretieraufnahme 16 des Schaltrahmens 10 eingreifen kann. Hierdurch wird die Verschwenkbarkeit des Übertragungsbauteils 2 um die Schwenkachse 3 blockiert.

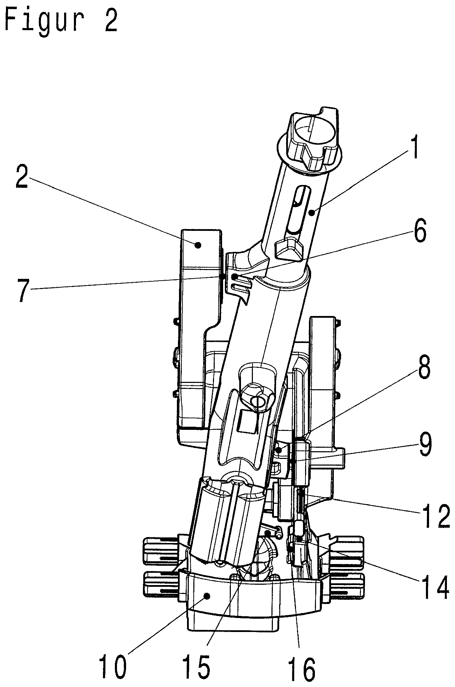

Figur 2 zeigt auch deutlich, dass der erste Vorsprung 6 und der zweite Vorsprung 8 in Bezug auf die Ausnehmungen 7 und 9 außer Eingriff stehen, wenn der Betätigungshebel 1 in die zweite Schaltgasse überführt ist. Dies ermöglicht es, dass der Betätigungshebel 1 - obwohl das Übertragungsbauteil 2 mittels des Arretiermittels 11 festgelegt ist - um die Schwenkachse 3 zum Hoch- oder Herunterschalten verschwenkbar ist.

Wenn der Betätigungshebel 1 von der zweiten Schaltgasse zurück in die erste Schaltgasse überführt wird, drückt der Betätigungsvorsprung 15 das Arretiermittel 11 aus der Arretieraufnahme 16. Gleichzeitig greifen die Vorsprünge 6 und 8 des Betätigungshebels 1 in die zugehörigen Ausnehmungen 7 und 9 des Übertragungsbauteils 2 ein, sodass mithilfe des Betätigungshebels 1 der Schaltseilzug beziehungsweise das Schaltgestänge wieder betätigt werden kann.

Aus der EP 2 261 535 A1 ist eine ähnliche Schaltvorrichtung für ein Getriebe eines Kraftfahrzeuges und aus der US 2004/0031346 A1 eine Schaltvorrichtung für ein Getriebe eines Kraftfahrzeuges nach dem Oberbegriff des Patentanspruchs 1 bekannt.

Problematisch bei einer derartigen Schaltvorrichtung ist es allerdings, dass, wenn sich der Betätigungshebel in der zweiten Schaltgasse befindet und der Schaltseilzug beziehungsweise das Schaltgestänge des Seilzugs vom Betätigungshebel entkoppelt ist, durch Lastwechselreaktionen Schläge auf den Schaltseilzug und somit auf das Übertragungsbauteil einwirken können. Durch diese Schläge kann das Arretiermittel außer Eingriff mit der Arretieraufnahme geraten, sodass das Übertragungsbauteil nicht mehr in der Arretieraufnahme gesichert und im ungünstigsten Fall sogar über den Schaltseilzug beziehungsweise das Schaltgestänge Schaltvorgänge durchgeführt werden.

Es ist die Aufgabe der vorliegenden Erfindung, eine Schaltvorrichtung der eingangs genannten Art derart weiterzubilden, dass eine zuverlässige und störunanfällige Funktion der Schaltvorrichtung, insbesondere wenn sich der Betätigungshebel in der zweiten Schaltgasse befindet, gewährleistet ist. Ferner ist es Aufgabe der Erfindung ein entsprechendes Getriebe und ein entsprechendes Kraftfahrzeug zur Verfügung zu stellen, bei denen zuverlässige und störunanfällige Funktionen der Schaltvorrichtung, insbesondere wenn sich der Betätigungshebel in der zweiten Schaltgasse befindet, gewährleistet sind.

Die Aufgabe wird durch eine Schaltvorrichtung mit allen Merkmalen des Patentanspruchs 1, einem Getriebe mit allen Merkmalen des Patentanspruchs 7 und einem Kraftfahrzeug mit allen Merkmalen des Patentanspruchs 8 gelöst. Vorteilhafte Ausgestaltungen der Erfindung finden sich in den Unteransprüchen.

Die erfindungsgemäße Schaltvorrichtung für ein Getriebe eines Kraftfahrzeuges weist einen Betätigungshebel auf, der wahlweise in eine erste Schaltgasse überführbar ist, in der er mit einem Übertragungsbauteil zur Betätigung eines Schaltseilzuges oder eines Schaltgestänges mechanisch verkoppelbar ist, oder in eine zweite Schaltgasse überführbar ist, in der er von dem Übertragungsbauteil entkoppelt ist. Dabei ist das Übertragungsbauteil beweglich gelagert, wobei ferner ein als Federelement ausgebildetes Arretiermittel vorgesehen ist, mit dem das Übertragungsbauteil derart festlegbar ist, dass es keine Kräfte auf dem Schaltseilzug beziehungsweise das Schaltgestänge ausübt, solange der Betätigungshebel in die zweite Schaltgasse überführt ist, der Schaltseilzug bzw. das Schaltgestänge sind insoweit kraftlos. Dabei weist die Arretieraufnahme eine Endzentrierung auf, in welcher das als Federelement ausgebildete Arretiermittel mit einem Formteil aufgenommen ist, wenn sich der Betätigungshebel in der zweiten Schaltgasse befindet, wobei die Arretieraufnahme weiter eine Entspannzentrierung aufweist. Dabei gibt das Arretiermittel das Übertragungsbauteil dadurch frei, dass der Betätigungshebel in die zweite Schaltgasse überführt wird, wobei das Arretiermittel in einer Arretieraufnahme aufgenommen ist, wenn sich der Betätigungshebel in der zweiten Schaltgasse befindet. Damit das Arretiermittel sicher in der Arretieraufnahme gehalten ist und auch dort verbleibt, solange der Benutzer den Betätigungshebel nicht in die erste Schaltgasse überführt, ist das Arretiermittel, wenn sich der Betätigungshebel in der zweiten Schaltgasse befindet, mit einer Rückstellkraft beaufschlagt, welche entgegen der Bewegungsrichtung des Arretiermittels beim Überführen des Betätigungshebels von der zweiten in die erste Schaltgasse gerichtet ist.

Durch die erfindungsgemäße Ausgestaltung ist nunmehr eine Schaltvorrichtung gegeben, bei der auch ein sicheres Verbleiben des Arretiermittels in der Arretieraufnahme beziehungsweise ein sofortiges selbsttätiges Rückführen des Arretiermittels in eine Sollposition der Arretieraufnahme gewährleistet ist, wenn der Schaltseilzug beziehungsweise das Schaltgestänge mit einer Schlagkraft beaufschlagt wird, durch welche das Arretiermittel aus der Arretieraufnahme herausgeführt wird. Sobald die Schlagkraft, welche nur punktuell auftritt, wieder vom Schaltseilzug beziehungsweise dem Schaltgestänge genommen wurde, bewegt sich das Arretiermittel aufgrund der Rückstellkraft und der besonderern geometrischen Ausgestaltung der Arretieraufnahme mit ihrer Endzentrierung und ihrer Entspannzentrierung selbsttätig in die Arretieraufnahme zurück. Hierdurch ist gewährleistet, dass das Übertragungsbauteil sicher fixiert ist, wenn sich der Betätigungshebel in der zweiten Schaltgasse entkoppelt von dem Übertragungsbauteil befindet, wobei durch die auf das als Federelement ausgebildete Arretiermittel einwirkende Rückstellkraft und die besondere geometrische Ausgestaltung der Arretieraufnahme das Arretiermittel sicher in der Arretieraufnahme gehalten ist und immer wieder, auch bei punktuell durch den Schaltseilzug eingebrachten Schlagkräfte, selbststätig in die als Sollposition für das Arretiermittel ausgebildete Endzentrierung der Arretieraufnahme zurückgeführt wird. Die spezielle Entspannzentrierung wirkt dabei im Wesentlichen in Art einer Fangkontur, die das Arretiermittel an einem vollständigen Herauslösen aus der Arretieraufnahme hindert. Vielmehr wird durch die erfindungsgemäße Ausgestaltung der Schaltvorrichtung gewährleistet, dass das Arretiermittel immer wieder in seine Sollposition in der Endzentrierung selbsttätig zurückgeführt wird, solange sich der Betätigungshebel in der zweiten Schaltgasse befindet. Somit können keine ungewollten selbsttätigen Schaltvorgänge durch das Übertragungsbauteil ausgelöst werden, wenn über den Schaltseilzug beziehungsweise das Schaltgestänge Schlagkräfte auf das Übertragungsbauteil einwirken. Der Betätigungshebel ist dabei in der zweiten Schaltgasse gehalten, sodass durch Anwahl von "+"oder durch Anwahl von "-" die Gangstufen des Getriebes hoch- beziehungsweise runter geschaltet werden können. Ein Überführen des Betätigungshebels aus der zweiten in die erste Schaltgasse kann mit der erfindungsgemäßen Schaltvorrichtung durch den Benutzer erfolgen, sodass nachfolgend wieder die Schaltstellungen R, D, N, P mit dem Betätigungshebel und dem damit mechanisch gekoppelten Übertragungsbauteil eingestellt werden können. Dabei hat es sich als vorteilhaft erwiesen, dass die Entspannzentrierung konisch in Richtung der Endzentrierung und konisch in Richtung von der Endzentrierung weg zuläuft, wobei das Formteil in seinem Querschnitt derart ausgebildet ist, dass es beim Herausbewegen der Endzentrierung wenigstens bereichsweise formschlüssig von der Entspannzentrierung aufnehmbar ist. Durch diese Ausgestaltung der Entspannzentrierung, welche auch als im Wesentlichen herzförmig bezeichnet werden kann, ist insbesondere gewährleistet, dass sich das Arretiermittel beziehungsweise sein Formteil nicht vollständig von der Arretieraufnahme löst, sondern dieses in der Entspannzentrierung gefangen wird und durch die Rückstellkraft des als Federelement ausgebildeten Arretiermittels wieder selbsttätig in die Endzentrierung überführt wird.

Als besonders vorteilhaft hat sich dabei herausgestellt, dass die Entspannzentrierung und/oder die Endzentrierung Flächen aufweist, an denen das Formteil durch eine in Richtung der Endzentrierung gerichteten Rückstellkraft, mit der das Arretiermittel beaufschlagt ist, wenn es sich der Betätigungshebel in der zweiten Schaltgasse befindet, selbsttätig in eine Sollposition überführbar ist. Als Sollposition ist dabei die Lage des Arretiermittels gemeint, in welcher dieses in der Arretieraufnahme in der Endzentrierung aufgenommen ist und sich der Betätigungshebel in der zweiten Schaltgasse befindet. Durch diese Ausgestaltung der Erfindung ist es ermöglicht, dass das Arretiermittel, wenn es sich durch auf den Schaltseilzug bzw. das Schaltgestänge einwirkende Schlagkräfte aus der Arretieraufnahme gelöst hat durch die Rückstellkraft entlang dieser Flächen selbsttätig und zwangsgeführt in die Sollposition in der Arretieraufnahme zurückgeführt wird. Vorteilhafterweise laufen diese Flächen dabei konisch zu, sodass das Formteil und damit das gesamte Arretierungsmittel mit korrespondierenden Fläche aufgrund der Rückstellkraft daran in eine Sollposition für das Formteil abgleiten kann, wenn sich das Formteil und damit das Arretiermittel aus der Arretieraufnahme durch vorgenannte Schlagkräfte herausbewegt hat und solange sich der Betätigungshebel in der zweiten Schaltgasse befindet.

Nach einer ersten vorteilhaften Ausgestaltung der Erfindung weist das als Federelement ausgebildete Arretiermittel eine Federzunge, auf, an dessen freien Ende das Formteil angeformt ist, dessen Form mit der Form der Arretieraufnahme im Bereich der Endzentrierung korrespondiert. Durch eine derartige Ausgestaltung des Arretiermittels mit einer Federzunge ist es in einfacher Weise ermöglicht, eine Rückstellkraft zu realisieren. Dabei kann an dem freien Ende dieser Federzunge das Formteil angeformt sein, dessen Form mit der Form der Arretieraufnahme derart zusammenwirkt, dass das Formteil und die Arretieraufnahme zumindest bereichsweise, insbesondere im Bereich der Endzentrierung der Arretieraufnahme im Wesentlichen formschlüssig miteinander verbunden sind, wenn der Betätigungshebel von der ersten Schaltgasse in die zweite Schaltgasse überführt wird. Eine solche Verbindung des Formteils und der Arretieraufnahme verhindert zudem, dass sich das Arretiermittel aus der Arretieraufnahme bereits bei kleinen Schlagkräften, die auf den Schaltseilzug beziehungsweise das Schaltgestänge einwirken, herausbewegt. Die Rückstellkraft der Federzunge beziehungsweise des als Federelement ausgebildeten Arretiermittels ist dabei derart gewählt, dass eine derartige Verbindung wieder stattfindet, auch wenn die auf den Schaltseilzug beziehungsweise das Schaltgestänge einwirkenden Schlagkräfte derart hoch sind, dass sich das Formteil und die Arretieraufnahme aus ihrer gegenseitigen zumindest bereichsweisen formschlüssigen Verbindung heraus gelöst haben.

Nach einer anderen vorteilhaften Ausgestaltung der Erfindung weist der Betätigungshebel einen Betätigungsvorsprung auf, mit dem das Arretiermittel beim Überführen des Betätigungshebels von der zweiten in die erste Schaltgasse mit seinem Formteil außer Eingriff mit der Arretieraufnahme bringbar ist. Durch diese Ausgestaltung ist es ohne großen technischen Aufwand in einfacher Weise möglich, beim Betätigen des Betätigungshebels während seines Überführens von der zweiten in die erste Schaltgasse gleichzeitig das Formteil des Arretiermittels außer Eingriff mit der Arretieraufnahme zu bringen, sodass das Übertragungsbauteil aus seiner Fixierung gelöst wird, um nachfolgend wieder mit dem Betätigungshebel mechanisch gekoppelt zu werden, sodass sich das Übertragungsbauteil wieder mit dem Betätigungshebel synchron mitbewegt, wenn dieser sich in der ersten Schaltgasse befindet.

Dabei kann es zum einen vorgesehen sein, dass das Arretiermittel an dem Übergangsbauteil und die Arretieraufnahme an einem Schaltrahmen oder einem Schaltgehäuse angeordnet sind.

Andererseits kann es natürlich auch vorgesehen sein, dass das Arretiermittel an einem Schaltrahmen oder einem Schaltgehäuse und die Arretieraufnahme an dem Übertragungsbauteil angeordnet ist.

Ferner kann dabei an dem Übertragungsbauteil vorteilhaft der Schaltseilzug oder das Schaltgestänge zum mechanischen Übertragen von Schaltbefehlen befestigt sein. Beispielsweise kann das Übertragungsbauteil einen Ankoppelpunkt für einen Schaltseilzug oder ein Schaltgestänge aufweisen.

Vorteilhafterweise kann zudem das Übertragungsbauteil einen ersten Schwenkarm und einen zweiten Schwenkarm aufweisen, wobei der Betätigungshebel vorzugsweise zwischen dem ersten Schwenkarm und dem zweiten Schwenkarm angeordnet ist und wobei der erste Schwenkarm und der zweite Schwenkarm vorzugsweise mittels eines Verbindungsteils fest miteinander verbunden sind. Durch diese Ausgestaltung ist es möglich, den Betätigungshebel an beiden Schwenkarmen des Übertragungsbauteils in einfacher Weise durch entsprechende Aufnahmen und dazu korrespondierende Vorsprünge an dem Betätigungshebel mechanisch anzukoppeln. Hierdurch ist eine besonders synchrone und ruckelfreie Betätigung des Betätigungshebels in der ersten Schaltgasse gewährleistet, da das Übertragungsbauteil beidseitig des Betätigungshebels mit diesem mechanisch gekoppelt ist und somit keine Scherkräfte zwischen Betätigungshebel und Übertragungsbauteil auftreten.

Vorteilhafterweise ist die Beweglichkeit, insbesondere die Verschwenkbarkeit des Übertragungsbauteils blockiert, wenn der Betätigungshebel in die zweite Schaltgasse überführt ist und die Beweglichkeit, insbesondere die Verschwenkbarkeit des Übertragungsbauteils ermöglicht, wenn der Betätigungshebel in die erste Schaltgasse überführt ist. Durch diese Ausgestaltung ist es ermöglicht, dass das Überführungsbauteil nur bewegt beziehungsweise verschwenkt werden kann, wenn sich der Betätigungshebel in der ersten Schaltgasse befindet.

Besonders vorteilhaft ist ein Getriebe, insbesondere ein Automatikgetriebe, für ein Kraftfahrzeug, das mit einer erfindungsgemäßen Schaltvorrichtung ausgerüstet ist.

Ebenso ist besonders vorteilhaft ein Kraftfahrzeug, welches mit einem derartigen Getriebe beziehungsweise mit einer erfindungsgemäßen Schaltvorrichtung ausgerüstet ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: eine Detailansicht einer Schaltvorrichtung nach dem Stand der Technik, bei der der Betätigungshebel in eine erste Schaltgasse überführt ist,
- Figur 2:: eine Detailansicht einer Schaltvorrichtung nach dem Stand der Technik, bei der der Betätigungshebel in eine zweite Schaltgasse überführt ist,
- Figur 3:: eine Detailansicht eines einer erfindungsgemäßen Schaltvorrichtung, bei der der Betätigungshebel in eine erste Schaltgasse überführt ist,
- Figur 4:: eine andere Detailansicht der erfindungsgemäßen Schaltvorrichtung gemäß Figur 3, wobei zusätzlich die Lage eines Arretierungsmittels gezeigt ist, in der der Betätigungshebel in eine erste Schaltgasse überführt ist und
- Figur 5:: eine Detailansicht einer Arretierungsaufnahme einer erfindungsgemäßen Schaltvorrichtung

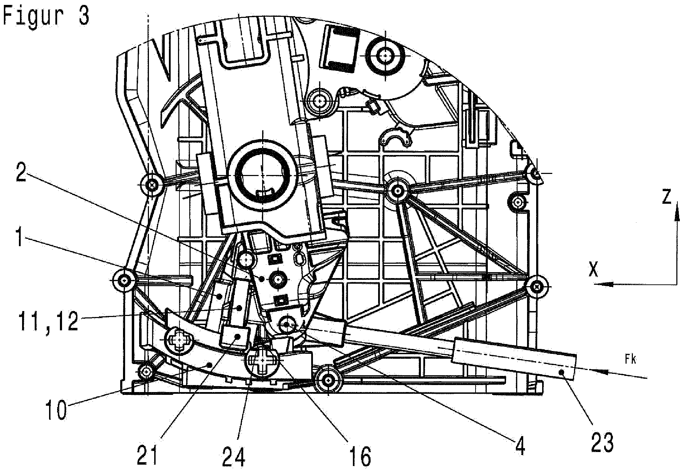

In der Figur 3 ist ein Ausführungsbeispiel einer erfindungsgemäßen Schaltvorrichtung gezeigt, bei der ein Betätigungshebel 1 der Schaltvorrichtung in eine erste Schaltgasse überführt ist. Die Schaltvorrichtung weist dabei neben dem Betätigungshebel 1 ein Übertragungsbauteil 2 auf, welches mit dem Betätigungshebel 1 mechanisch gekoppelt ist, wenn dieser sich in einer ersten Schaltgasse befindet. Befindet sich der Betätigungshebel 1 jedoch in einer zweiten Schaltgasse, ist das Übertragungsbauteil 2 von dem Betätigungshebel 1 mechanisch entkoppelt.

In der Darstellung gemäß der Figur 3 befindet sich - wie bereits erwähnt - der Betätigungshebel 1 in der ersten Schaltgasse, sodass das Übertragungsbauteil 2 mechanisch mit dem Betätigungshebel 1 gekoppelt ist. An dem Übertragungsbauteil 2 ist ein Arretierelement 11 angeordnet, welches vorliegend einen Federbügel 12 aufweist, an dessen freiem Ende ein Formteil 21 angeordnet ist, welches in einer Arretieraufnahme 16 aufgenommen ist, wenn sich der Betätigungshebel 1 in der zweiten Schaltgasse befindet.

An dem Übertragungsbauteil 2 ist zudem eine Ankoppelstelle 4 angeordnet, an welcher ein Schaltseilzug 23 angekoppelt ist. Mittels des Schaltseilzuges 23 können über den Betätigungshebel 1 die verschiedenen Getriebemodi beziehungsweise Schaltstellungen R, D, N, P an einem an einem anderen Ende des Schaltseilzuges 23 angeordneten Getriebes eingestellt werden, wenn sich der Betätigungshebel 1 in der ersten Schaltgasse befindet und somit mit dem Übertragungsbauteil 2 mechanisch gekoppelt ist.

Die Arretieraufnahme 16 für das Formteil 21 des als Federbügel 12 ausgebildeten Arretiermittels ist in diesem Ausführungsbeispiel an einem Schaltrahmen 10 angeordnet beziehungsweise als eigenständiges Formteil angeformt.

In der Figur 3 ist zudem mit einem Pfeil und dem Bezugszeichen F_{K} eine Kraft angedeutet, die auf den Schaltseilzug 23 einwirken und welche als Schlagkraft während des Betriebes eines Kraftfahrzeuges mit einer derartigen Schaltvorrichtung auftreten kann. Derartige Schlagkräfte F_{K} können dazu führen, dass das Arretiermittel 11 außer Eingriff mit der Arretieraufnahme 16 gelangen kann, wenn sich der Betätigungshebel 1 in der zweiten Schaltgasse befindet, und somit das gesamte Übertragungsbauteil 2 aus seiner Fixierung gelöst werden kann. Damit das Arretiermittel 11 sicher durch die Arretieraufnahme 16 gehalten ist, wenn sich der Betätigungshebel 1 in der zweiten Schaltgasse befindet und somit das Übertragungsbauteil 2 sicher fixiert ist, ist es vorgesehen, dass das Arretiermittel 11 ein Federelement aufweist, welches vorliegend als Federzunge 12 ausgebildet ist, an deren freiem Ende ein Formteil 21 angeordnet ist, wobei die Federzunge 12 mit einer Rückstellkraft beaufschlagt ist. Die Rückstellkraft ist dabei derart gerichtet, dass sie entgegen der Bewegungsrichtung des Betätigungshebels 1 beim Überführen von der zweiten Schaltgasse in die erste Schaltgasse gerichtet ist. Ferner ist diese Rückstellkraft derart dimensioniert, dass sie das Formteil 21 über Flächen 22 der Arretieraufnahme 16 zwangsgeführt und selbsttätig in eine Sollposition der Arretieraufnahme 16 zurückführt, wenn Schlagkräfte F_{K}, die auf den Schaltseilzug 23 eingewirkt haben und zu einem Herauslösen des Formteils 21 aus der Arretieraufnahme 16 geführt haben. Dabei laufen die Flächen 22 konisch zusammen und wirken mit entsprechenden Flächen des Formteils 21 derart zusammen, dass diese an den Flächen 22 durch die Rückstellkraft solange abgleiten, bis das Formteil 21 seine Sollposition in der Endzentrierung 25 eingenommen hat und das Übertragungsbauteil 2 sicher fixiert ist. Um bei einer Kraftbeaufschlagung durch den Schaltseilzug 23 ein vollständiges Herauslösen des Formteils 21 beziehungsweise des Arretiermittels 11 aus der Arretieraufnahme 16 zu vermeiden ist eine Entspannzentrierung 26 innerhalb der Arretieraufnahme 16 vorgesehen. Die Entspannzentrierung 26 ist dabei im Wesentlichen herzförmig ausgebildet und läuft konisch in Richtung der Endzentrierung 25 und konisch in Richtung von der Endzentrierung 25 weg zu.

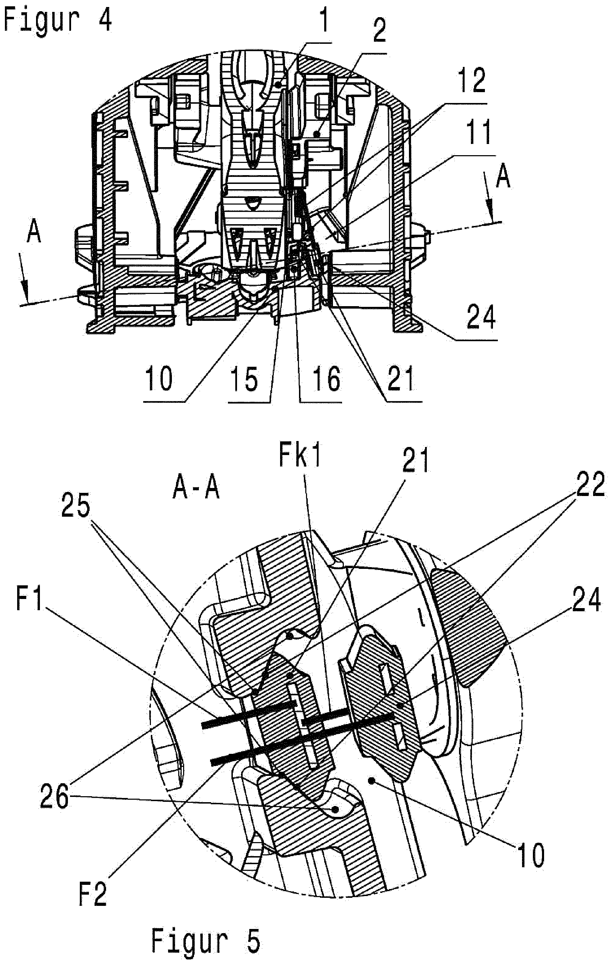

In der Figur 5 ist der Schaltrahmen 10 der Figuren 3 und 4 in einer Draufsicht dargestellt entlang eines Schnittes A-A der Figur 4. Deutlich zu erkennen sind hierbei die Flächen 22, an denen das Formteil 21 des Arretiermittels 11 durch eine Rückstellkraft F₁ in eine als konische Endzentrierung 25 ausgebildete Sollposition in der Arretieraufnahme 16 gleiten kann. Mit F_{K1} ist in der Figur 5 dabei die Komponente einer auf den Schaltseilzug 23 einwirkenden Schlagkraft F_{K} angezogen, die ein Herauslösen des Formteils 21 des Arretiermittels 11 aus der Arretieraufnahme 16 beziehungsweise der Endzentrierung bewirken kann.

Mit dem Bezugszeichen 24 ist hierbei eine Position des Formteils 21 dargestellt, die es annimmt, wenn der Betätigungshebel 1 in die erste Schaltgasse überführt wurde. Dabei wird das Arretiermittel 11 mittels eines Betätigungsvorsprungs 15, wie er in Figur 4 dargestellt ist, in der Position 24 gehalten. Wenn sich das Formteil 21 in dieser Position 24 befindet, ist das Übertragungsbauteil 2 mit dem Betätigungshebel 1 mechanisch gekoppelt, wie dies in Figur 4 ebenfalls dargestellt ist.

In Figur 5 ist zudem mit F₂ die Kraftkomponente der Rückstellkraft des Arretiermittels 11 dargestellt, die wirkt, wenn das Arretiermittel 11 mittels des Betätigungsvorsprungs 15 in der Position 24 gehalten wird.

In Figur 4 ist wie bereits erwähnt, der Betätigungshebel 1 in der ersten Schaltgasse angeordnet. Dabei ist der Betätigungshebel 1 mit dem Übertragungsbauteil 2 mechanisch gekoppelt. Um den Erfindungsgedanken nochmals zu verdeutlichen, ist in der Figur 4 das Arretierungsmittel zum einen einmal mit dem Formteil 21 in der Position 24 dargestellt, wie es der Positionierung des Betätigungshebels 1 in dieser Darstellung der Figur 4 entspricht. Zum anderen ist allerdings das Formteil 21 in der Figur 4 auch derart dargestellt, wie es in der Arretierungsaufnahme 16, welches ebenfalls als gesondertes Formteil ausgebildet ist, aufgenommen ist, was eigentlich der Position des Betätigungshebels 1 in der zweiten Schaltgasse entspricht, die hier in Figur 4 allerdings nicht dargestellt ist. In dieser Position liegt das Formteil 21 mit seinen Flächen, die zum Abgleiten an den Flächen 22 der Arretieraufnahme 16 ausgebildet sind, an entsprechenden konischen Endzentrierungen 25 an.

### Bezugszeichenliste

- 1: Betätigungshebel
- 2: Übertragungsbauteil
- 3: Schwenkachse
- 4: Ankoppelstelle
- 5: Überführungsachse
- 6: Erster Vorsprung
- 7: Erste Ausnehmung
- 8: Zweiter Vorsprung
- 9: Zweite Ausnehmung
- 10: Schaltrahmen
- 11: Arretiermittel
- 12: Federzunge
- 13: Zweites Ende
- 14: Betätigungsvorsprung
- 15: Arretieraufnahme
- 16: Formteil
- 17: Fläche
- 18: Schaltseilzug
- 19: Position
- 20: Konische Endzentrierung
- 21: Konische Entspannzentrierung
- FK: Schlagkraft
- FK1: Komponente der Schlagkraft
- F1: Rückstellkraft
- F2: Rückstellkraft
- A-A: Schnitt

## Patentansprüche

1. Schaltvorrichtung für ein Getriebe eines Kraftfahrzeuges, mit einem Betätigungshebel (1), der wahlweise
a) in eine erste Schaltgasse überführbar ist, in der er mit einem Übertragungsbauteil (2) zur Betätigung eines Schaltseilzuges (23) oder eines Schaltgestänges mechanisch verkoppelt ist, oder
b) in eine zweite Schaltgasse überführbar ist, in der er von dem Übertragungsbauteil (2) entkoppelt ist,
wobei das Übertragungsbauteil (2) beweglich gelagert ist und
wobei ein als Federelement ausgebildetes Arretiermittel (11) vorgesehen ist,
c) mit dem das Übertragungsbauteil (2) derart festlegbar ist, dass das Übertragungsbauteil (2) keine Kräfte auf den Schaltseilzug (23) beziehungsweise das Schaltgestänge ausübt, solange der Betätigungshebel (1) in die zweite Schaltgasse überführt ist und
d) welches in einer Arretieraufnahme (16) aufgenommen ist, wenn sich der Betätigungshebel (1) in der zweiten Schaltgasse befindet,
wobei die Arretieraufnahme (16) eine Endzentrierung (25) aufweist, in welcher das als Federelement ausgebildete Arretiermittel (11) mit einem Formteil (21) aufgenommen ist, wenn sich der Betätigungshebel (1) in der zweiten Schaltgasse befindet, wobei die Arretieraufnahme (16) weiter eine Entspannzentrierung (26) aufweist, wobei die Entspannzentrierung (26) konisch in Richtung der Endzentrierung (25) und konisch in Richtung von der Endzentrierung (25) weg zuläuft, wobei das Formteil (21) in seinem Querschnitt derart ausgebildet ist, dass es beim Herausbewegen aus der Endzentrierung (25) wenigstens bereichsweise formschlüssig von der Entspannzentrierung (26) aufnehmbar ist, wobei die Entspannzentrierung (26) und/oder die Endzentrierung Flächen (22) aufweist, an denen das Formteil (21) durch eine in Richtung der Endzentrierung (25) gerichteten Rückstellkraft des als Federelement ausgebildeten Arretiermittels (11) mit der das Arretiermittel (11) beaufschlagt ist, wenn sich der Betätigungshebel (1) in der zweiten Schaltgasse befindet, selbsttätig in die als Sollposition für das Arretiermittel (11) ausgebildete Endzentrierung (25) der Arretieraufnahme (16) überführbar ist, **dadurch gekennzeichnet, dass** der Betätigungshebel (1) einen Betätigungsvorsprung (15) aufweist, mit dem das Arretiermittel (11) beim Überführen des Betätigungshebels (1) von der zweiten in die erste Schaltgasse mit seinem Formteil (21) außer Eingriff mit der Arretieraufnahme (16) bringbar ist.

2. Schaltvorrichtung nach Anspruch 1, **dadurch gekennzeichnet, dass** das als Federelement ausgebildete Arretiermittel (11) eine Federzunge (12) aufweist, an dessen freiem Ende das Formteil (21) angeformt ist, dessen Form mit der Form der Arretieraufnahme (16) im Bereich der Endzentrierung (25) korrespondiert.

3. Schaltvorrichtung nach einem der vorhergehenden Ansprüche, **dadurch gekennzeichnet, dass** entweder das Arretiermittel (11) an dem Übertragungsbauteil (2) und die Arretieraufnahme (16) an einem Schaltrahmen (10) oder einem Schaltgehäuse angeordnet ist oder das Arretiermittel (11) an einem Schaltrahmen (10) oder einem Schaltgehäuse und die Arretieraufnahme (16) an dem Übertragungsbauteil (2) angeordnet ist.

4. Schaltvorrichtung nach einem der vorhergehenden Ansprüche, **dadurch gekennzeichnet, dass** an dem Übertragungsbauteil (2) der Schaltseilzug (23) oder das Schaltgestänge angeordnet ist.

5. Schaltvorrichtung nach einem der vorhergehenden Ansprüche, **dadurch gekennzeichnet, dass** das Übertragungsbauteil (2) einen ersten Schwenkarm (17) und einen zweiten Schwenkarm (18) aufweist, wobei der Betätigungshebel (1) zwischen dem ersten Schwenkarm (17) und dem zweiten Schwenkarm (18) angeordnet ist und wobei der erste Schwenkarm (17) und der zweite Schwenkarm (18) mittels eines Verbindungsteils fest miteinander verbunden sind.

6. Schaltvorrichtung nach einem der vorhergehenden Ansprüche, **dadurch gekennzeichnet, dass** die Verschwenkbarkeit des Übertragungsbauteils (2) blockiert ist, wenn der Betätigungshebel (1) in die zweite Schaltgasse überführt ist und dass die die Verschwenkbarkeit des Übertragungsbauteils (2) ermöglicht ist, wenn der Betätigungshebel (1) in die erste Schaltgasse überführt ist.

7. Getriebe eines Kraftfahrzeuges mit einer Schaltvorrichtung nach einem der vorhergehenden Ansprüche.

8. Kraftfahrzeug mit einem Getriebe nach Anspruch 7 und/oder mit einer Schaltvorrichtung nach einem der Ansprüche 1 bis 6.

## Claims

1. Switching device for a gearbox of a motor vehicle, having an actuation lever (1), which can optionally be
a) transferred into a first shift gate in which it is mechanically coupled to a transmission component (2) for actuating a switching cable pull (23) or a gear shift linkage, or
b) transferred into a second shift gate in which it is decoupled form the transmission component (2),
wherein the transmission component (2) is mounted in a movable manner, and wherein an arresting means (11) embodied as a spring element is provided
c) by means of which the transmission component (2) can be fixedly attached in such a manner, that the transmission component (2) does not apply any force to the switching cable pull (23) or the gear shift linkage as long as the actuation lever (1) is transferred into the second shift gate, and
d) which is received inside an arresting reception area (16) when the actuation lever (1) is in the second shift gate,
wherein the arresting reception area (16) has an end centering (25) in which the arresting means (11) embodied as a spring element is received with a shaped part (21) when the actuation lever (1) is in the second shift gate, wherein the arresting reception area (16) further has a releasing centering (26), wherein the releasing centering (26) extends conically in the direction of the end centering (25) and conically in the direction away from the end centering (25), wherein the shaped part (21) has a cross section that is formed in such a manner that it can be received by the releasing centering (26) in a form-fitted manner at least in certain areas when being moved out of the end centering (25), wherein the releasing centering (26) and/or the end centering have surfaces (22) at which the shaped part (21) can be transferred in a self-acting manner into the end centering (25) of the arresting reception area (16) that is embodied as a target position for the arresting means (11) by a restoring force of the arresting means (11) embodied as a spring element that is acting in the direction of the end centering (25) and that is applied to the arresting means (11) when the actuation lever (1) is in the second shift gate,
**characterized in that** the actuation lever (1) has an actuation projection (15) by means of which the arresting means (11) can be brought out of mesh with the arresting reception area (16) with its shaped part (21) during the transfer of the actuation lever (1) from the second into the first shift gate.

2. Switching device according to claim 1, **characterized in that** the arresting means (11) that is formed as a spring element has a spring tongue (12), with the shaped part (21) being formed at its free end, and with the shape of the shaped part (21) corresponding to the shape of the arresting reception area (16) in the area of the end centering (25).

3. Switching device according to any of the preceding claims, **characterized in that** either the arresting means (11) is arranged at the transmission component (2) and the arresting reception area (16) is arranged at the shifting frame (10) or a switch housing, or the arresting means (11) is arranged at a shifting frame (10) or a switch housing and the arresting reception area (16) is arranged at a transmission component (2).

4. Switching device according to any of the preceding claims, **characterized in that** the switching cable pull (23) or the gear shift linkage are arranged at the transmission component (2).

5. Switching device according to any of the preceding claims, **characterized in that** the transmission component (2) has a first pivoting arm (17) and a second pivoting arm (18), wherein the actuation lever (1) is arranged between the first pivoting arm (17) and the second pivoting arm (18), and wherein the first pivoting arm (17) and the second pivoting arm (18) are fixedly connected to each other by means of a connection part.

6. Switching device according to any of the preceding claims, **characterized in that** the pivotability of the transmission component (2) is blocked when the actuation lever (1) is transferred into the second shift gate, and that the pivotability of the transmission component (2) is enabled when the actuation lever (1) is transferred into the first shift gate.

7. Gear of a motor vehicle with a switching device according to any of the preceding claims.

8. Motor vehicle with a gear according to claim 7 and/or with a switching device according to any of the claims 1 to 6.

## Revendications

1. Dispositif de changement de vitesses pour une transmission de véhicule automobile, comprenant un levier d'actionnement (1) qui, au choix,
a) peut être transféré dans une première voie de changement de vitesses dans laquelle il est accouplé mécaniquement à un composant de transmission (2) pour actionner un câble Bowden de changement de vitesses (23) ou une tringlerie de commutation, ou
b) peut être transféré dans une deuxième voie de changement de vitesse dans laquelle il est désaccouplé du composant de transmission (2),
le composant de transmission (2) étant supporté de manière mobile et
un moyen de blocage (11) réalisé sous forme d'élément de ressort étant prévu,
c) avec lequel le composant de transmission (2) peut être fixé de telle sorte que le composant de transmission (2) n'exerce aucune force sur le câble Bowden de changement de vitesses (23) ou sur la tringlerie de changement de vitesses tant que le levier d'actionnement (1) est transféré dans la deuxième voie de changement de vitesses et
d) qui est reçu dans un logement de blocage (16) lorsque le levier d'actionnement (1) se trouve dans la deuxième voie de changement de vitesses,
le logement de blocage (16) présentant un centrage terminal (25) dans lequel est reçu le moyen de blocage (11) réalisé sous forme d'élément à ressort avec une pièce moulée (21), lorsque le levier d'actionnement (1) se trouve dans la deuxième voie de changement de vitesse, le logement de blocage (16) présentant en outre un centrage de détente (26), le centrage de détente (26) pointant sous forme conique dans la direction du centrage terminal (25) et pointant sous forme conique dans la direction s'éloignant du centrage terminal (25), la pièce moulée (21) ayant une section transversale réalisée de telle sorte que lors du déplacement hors du centrage terminal (25), elle puisse être reçue au moins en partie par engagement par correspondance de formes par le centrage de détente (26), le centrage de détente (26) et/ou le centrage terminal présentant des surfaces (22) au niveau desquelles la pièce moulée (21) peut être transférée automatiquement dans le centrage terminal (25) du logement de blocage (16) réalisé en tant que position de consigne pour le moyen de blocage (11), par une force de rappel du moyen de blocage (11) réalisé sous forme d'élément à ressort, orientée dans la direction du centrage terminal (25), avec laquelle le moyen de blocage (11) est sollicité lorsque le levier d'actionnement (1) se trouve dans la deuxième voie de changement de vitesses, **caractérisé en ce que** le levier d'actionnement (1) présente une saillie d'actionnement (15) avec laquelle le moyen de blocage (11), lors du transfert du levier d'actionnement (1) de la deuxième dans la première voie de changement de vitesse, peut être amené avec sa pièce moulée (21) hors d'engagement avec le logement de blocage (16).

2. Dispositif de changement de vitesses selon la revendication 1, **caractérisé en ce que** le moyen de blocage (11) réalisé en tant qu'élément à ressort présente une langue à ressort (12) à l'extrémité libre de laquelle est façonnée la pièce moulée (21), dont la forme correspond à la forme du logement de blocage (16) dans la région du centrage terminal (25).

3. Dispositif de changement de vitesses selon l'une quelconque des revendications précédentes, **caractérisé en ce que** soit le moyen de blocage (11) est disposé au niveau du composant de transfert (2) et le logement de blocage (16) est disposé au niveau d'un cadre de changement de vitesses (10) ou d'un boîtier de changement de vitesses, ou le moyen de blocage (11) est disposé au niveau d'un cadre de changement de vitesses (10) ou d'un boîtier de changement de vitesses et le logement de blocage (16) est disposé au niveau du composant de transfert (2).

4. Dispositif de changement de vitesses selon l'une quelconque des revendications précédentes, **caractérisé en ce que** le câble Bowden de changement de vitesses (23) ou la tringlerie de changement de vitesses est disposé(e) au niveau du composant de transfert (2).

5. Dispositif de changement de vitesses selon l'une quelconque des revendications précédentes, **caractérisé en ce que** le composant de transfert (2) présente un premier bras pivotant (17) et un deuxième bras pivotant (18), le levier d'actionnement (1) étant disposé entre le premier bras pivotant (17) et le deuxième bras pivotant (18), et le premier bras pivotant (17) et le deuxième bras pivotant (18) étant connectés fixement l'un à l'autre au moyen d'une pièce de connexion.

6. Dispositif de changement de vitesses selon l'une quelconque des revendications précédentes, **caractérisé en ce que** la capacité de pivotement du composant de transfert (2) est bloquée lorsque le levier d'actionnement (1) est transféré dans la deuxième voie de changement de vitesses et **en ce que** la capacité de pivotement du composant de transfert (2) est assurée lorsque le levier d'actionnement (1) est transféré dans la première voie de changement de vitesses.

7. Transmission pour un véhicule automobile comprenant un dispositif de changement de vitesses selon l'une quelconque des revendications précédentes.

8. Véhicule automobile comprenant une transmission selon la revendication 7 et/ou un dispositif de changement de vitesses selon l'une quelconque des revendications 1 à 6.
